(19) Europäisches Patentamt
European Patent Office
Office européen des brevets

(11) **EP 4 339 561 A1**

(12) **EUROPEAN PATENT APPLICATION**
published in accordance with Art. 153(4) EPC

(43) Date of publication:
**20.03.2024 Bulletin 2024/12**

(21) Application number: **21941996.7**

(22) Date of filing: **24.09.2021**

(51) International Patent Classification (IPC):
*G01D 21/00* (2006.01)        *G01J 3/46* (2006.01)
*G01J 3/52* (2006.01)         *G01K 11/12* (2021.01)

(52) Cooperative Patent Classification (CPC):
**C09K 9/00; G01D 21/00; G01J 3/46; G01J 3/52;
G01K 11/12; G01K 11/16; G01N 21/27;
G06K 19/06; G09F 3/00; G09F 3/02**

(86) International application number:
**PCT/JP2021/035202**

(87) International publication number:
**WO 2022/239267 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.05.2021 JP 2021082655**

(71) Applicant: **Hitachi Industrial Equipment Systems
Co., Ltd.
Tokyo 101-0021 (JP)**

(72) Inventors:
• **TSUBOUCHI, Shigetaka
Tokyo 100-8280 (JP)**

• **SASAKI, Hiroshi
Tokyo 100-8280 (JP)**
• **OKAZAKI, Choichiro
Tokyo 100-8280 (JP)**
• **OGINO, Masahiko
Tokyo 101-0021 (JP)**
• **AIDA, Kohhei
Tokyo 101-0021 (JP)**

(74) Representative: **MERH-IP Matias Erny Reichl
Hoffmann
Patentanwälte PartG mbB
Paul-Heyse-Strasse 29
80336 München (DE)**

(54) **PRINTED MATTER AND READING SYSTEM**

(57)     A reading system reading a color density of a printed matter formed with an ink whose color density changes depending on a surrounding environment comprises a reading apparatus and an information processing apparatus. The printed matter has a first region (reference region (100)) formed with the ink and a second region (sensor region (101)) formed with the ink identical to the first region. The first region is in a colored state or a decolored state and a color density of the second region is different from that of the first region. The reading apparatus obtains an image including the first region and the second region. The information processing apparatus determines color information of the second region by using color information of the first region as a standard. The printed matters include a circle type printed matter, a double-circle type printed matter, a dot type printed matter, a barcode type printed matter, a QR code type printed matter and the like.

FIG. 1A

**Description**

**TECHNICAL FIELD**

The present invention relates to a printed matter and a reading system.

**BACKGROUND ART**

There is a displayed object (paper piece or the like) in which color development is achieved by using an ink (environment detection ink) whose color changes depending on a change in an environment such as temperature. Such a displayed object is applied to a measurement target for which conversion of a measurement value of temperature or the like to an electric signal is difficult or is applied in response to a demand for performing sensing at low cost, as a color sensor that detects the change of the environment.

A color of the color sensor normally displays a color between a color in a state before the color development and a color in a state where the color development is at the maximum level. When obtaining of a rough measurement value is sufficient, it is only necessary to check the color development with the naked eyes. When an accurate measurement value is desired to be mechanically obtained, a reading apparatus that converts the color of the color sensor to a quantitative digital value is necessary.

There is a method of obtaining color information from an image capturing the color sensor as a color evaluation apparatus. In this method, since the obtained image is greatly affected by a photographic environment and photographic equipment, highly-accurate color evaluation is difficult. The imaging environment that affects the image includes, for example, type and brightness of a light source. A spectrum of light casted on an object changes in various ways depending on the type of light source (type of illumination) such as direct sunlight, outside light in overcast weather, fluorescent light, and incandescence light and a degree of attenuation of light from the light source.

In many cases, multiple light sources exist and light from these multiple light sources are sometimes mixed. It is not rare that the location of the sensor or the direction of the sensor facing, a standing position of a photographer, and the like are different depending on a situation of photographing. Moreover, time of photographing (position of the sun), weather, and the like also change at all times. The brightness and spectrum of light casted on a sensor of a target for photographing change in various ways due to these factors.

Patent Literature 1 discloses a measurement apparatus including an analyzer and a corrector, in which the analyzer obtains correction values of color samples from color image data capturing color samples of three color samples and a color sensor whose color changes simultaneously and the corrector corrects the color of the color sensor by using the correction values.

Patent Literature 2 discloses a color evaluation apparatus as follows. Color information of four or more color samples captured in a first photographic environment is registered in a storage. The color evaluation apparatus obtains a sensor color of a color sensor that changes depending on a physical quantity to be measured and four or more reference colors that are unaffected by the physical quantity, from photograph data at the time of measurement obtained by photographing an indication object indicating the sensor color and the four or more reference colors, in a second photographic environment. The color evaluation apparatus can thereby obtain a measurement value at high accuracy from the color sensor photographed under various photographic environments.

The color of the color sensor may be thereby corrected at high accuracy by using the color samples captured in the same image as a clue even when the color sensor is photographed under various light sources.

**PRIOR ART DOCUMENTS**

**Patent Document**

Patent Literature 1: Japanese Patent Application Publication No. 2012-93277
Patent Literature 2: Japanese Patent Application Publication No. 2020-38073

**SUMMARY OF INVENTION**

**Problems to be solved**

However, the color correction in each of Patent Literature 1 and Patent Literature 2 uses the color samples with colors different from that of the color sensor region. Moreover, color samples that are different from the environment detection ink used for the color sensor and that hardly change by the change of the environment are used as the color samples.

Using the color samples that are different from the environment detection ink used for the color sensor and that hardly change depending on the change of the environment needs at least two or more types of inks and increases the number of steps of applying the inks in production steps of the color sensor.

The present invention has been made to solve the aforementioned problems, and an object is to provide a printed matter that is printed with an environment detection ink in which the productivity of the printed matter is high and color information of the printed matter is accurately read. Further, an object is to provide a reading system of the printed matter.

## Solution to Problems

In order to achieve the aforementioned object, the printed matter of the present invention is a printed matter formed by using ink whose color density changes depending on an change of an environmental, the printed matter including a first region (for example, reference region 100) formed by using the ink and a second region (for example, sensor region 101) formed by using the ink identical to the ink of the first region, the first region is in a colored state or decolored state, and the second region has a color density different from that of the first region at a start time point of monitoring of the change of the environment.

Moreover, the present invention provides a reading system that reads a color density of a printed matter formed by using an ink whose color density changes depending on a surrounding environment, and includes an information obtaining apparatus and an information processing apparatus. The printed matter includes a first region formed by using the ink and a second region formed by using the ink identical to the ink of the first region, in which the first region is in a colored state or decolored state, the second region has a color density different from that of the first region, at a start time point of monitoring of the change of the environment change. The information obtaining apparatus obtains color information of the first region and the second region. The information processing apparatus determines the color information of the second region by using the color information of the first region as a reference. Other solving means are described later in Description of Embodiments.

## Advantageous Effects of Invention

The present invention provides a printed matter formed with an environment detection ink in which the productivity of the printed matter is high and the color information of the printed matter is accurately read, and a reading system of the printed matter.

## BRIEF DESCRIPTION OF DRAWINGS

FIG. 1A is a schematic diagram of a state before a change of a sensor region in a circle type printed matter according to a first embodiment.
FIG. 1B is a schematic diagram of a state in the middle of the change of the sensor region in the circle type printed matter according to the first embodiment.
FIG. 1C is a schematic diagram of a state after the change of the sensor region in the circle type printed matter according to the first embodiment.
FIG. 2A is a schematic diagram of a state before a change of the sensor region in a double-circle type printed matter according to a second embodiment.
FIG. 2B is a schematic diagram of a state in the middle of the change of the sensor region in the double-circle type printed matter according to the second embodiment.
FIG. 2C is a schematic diagram of a state after the change of the sensor region in the double-circle type printed matter according to the second embodiment.
FIG. 3A is a schematic diagram of a state before a change of the sensor region in a dot type printed matter according to a third embodiment.
FIG. 3B is a schematic diagram of a state in the middle of the change of the sensor region in the dot type printed matter according to the third embodiment.
FIG. 3C is a schematic diagram of a state after the change of the sensor region in the dot type printed matter according to the third embodiment.
FIG. 4A is a schematic diagram of a state before a change of the sensor region in a barcode type printed matter according to a fourth embodiment.

FIG. 4B is a schematic diagram of a state in the middle of the change of the sensor region in the barcode type printed matter according to the fourth embodiment.

FIG. 4C is a schematic diagram of a state after the change of the sensor region in the barcode type printed matter according to the fourth embodiment.

FIG. 5A is a schematic diagram of a state before a change of the sensor region in a QR code type printed matter according to a fifth embodiment.

FIG. 5B is a schematic diagram of a state in the middle of the change of the sensor region in the QR code type printed matter according to the fifth embodiment.

FIG. 5C is a schematic diagram of a state after the change of the sensor region in the QR code type printed matter according to the fifth embodiment.

FIG. 6 is an explanatory diagram explaining an intermediate color of color development.

FIG. 7 is an explanatory view showing an exterior and a configuration of a reading terminal that is an example of a reading system according to the present embodiment.

**DESCRIPTION OF EMBODIMENTS**

Although the present invention is described below, the present invention is not limited to the following contents, and may be carried out with any modification within a scope in which effects of the present embodiment are not significantly damaged. The present invention may be carried out while combining different embodiments. In the following description, the same members in different embodiments are denoted by the same reference numerals, and overlapping description is omitted.

(First Embodiment)

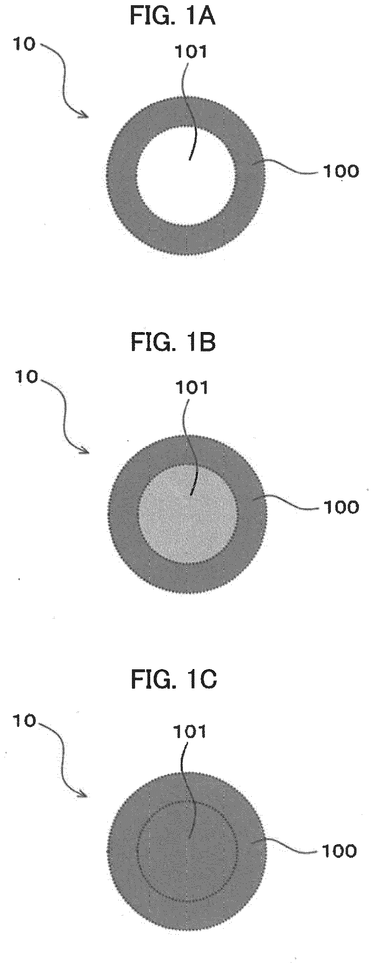

FIG. 1A is a schematic diagram of a state before a change of a sensor region 101 in a circle type printed matter 10 according to a first embodiment. FIG. 1B is a schematic diagram of a state in a middle of the change of the sensor region 101 in the circle type printed matter 10 according to the first embodiment. FIG. 1C is a schematic diagram of a state after the change of the sensor region 101 in the circle type printed matter 10 according to the first embodiment.

FIGs. 1A to 1C are schematic diagrams of the circle type printed matter 10 that is shown in a circular form in a simplified manner for the description of the configuration of the present embodiment. The circle type printed matter 10 is configured such that a reference region 100 and the sensor region 101 are arranged to be in contact with each other. The circle type printed matter 10 includes colored regions, and the color thereof is not limited to a particular color. Specifically, the circle type printed matter 10 is, for example, blue, and is displayed on, for example, a product (not shown), having, for example, a white ground. In the shown example, the depth of blue is represented by shade of black and white. For example, the reference region 100 and the sensor region 101 may be displayed by printing with an ink that develops a color depending on a change of an environment (environment detection ink), for example, an ink that develops a blue color, for example, when temperature becomes high or low.

Note that the display also includes printing matters directly on the surfaces of products, printing matters on documents, labels and the like to be adhered and attached to products, and similar operations.

The environment detection ink used in the reference region 100 and the sensor region 101 is an ink that develops a color based on the magnitude of, for example, temperature, humidity, light, gas concentration, vibration, or the like.

Among the environment detection inks used in the reference region 100 and the sensor region 101, for example, an inorganic thermochromic material made of a metal complex salt or an organic material such as a leuco dye or a thermochromic liquid crystal may be used as an ink that changes its color based on the magnitude of temperature. Among these, a preferably used ink is an ink that changes its color depending on a product of a multiplication of temperature and elapsed time and that includes a leuco dye, a developer, and a decolorant.

An electron-donating compound that gives a color by reacting with an electron-accepting developer may be used as the leuco dye. For example, compounds such as triphenylmethanephthalide, fluoran, phenothiazine, indolylphthalide, leuco auramine, spiropyran, rhodamine-lactame, triphenylmethane, triazene, spirophthalan xanthene, naphtholactam, or azomethine-based compounds may be used.

An electron-accepting compound that changes a molecular structure of the electron-donating leuco dye by reacting with the leuco dye may be used as the developer. As specific examples of the developer, compounds such as benzyl 4-hydroxybenzoate, 2,2'-biphenol, 1,1-bis(3-cyclohexyl-4-hydroxyphenyl)cyclohexane, 2,2-bis(3-cyclohexyl-4-hydroxyphenyl)propane, bisphenol A, bisphenol B, bisphenol C, bisphenol E, bisphenol F, bisphenol G, bis(4-hydroxyphenyl) sulfide, 1,1-bis(4-hydroxyphenyl)cyclohexane, 1,1-bis(4-hydroxy-3-methylphenyl)cyclohexane, $\alpha,\alpha,\alpha'$-tris(4-hydroxyphenyl)-1-ether-4-isopropylbenzene, and the like, phenols such as para-hydroxybenzoate ester and gallic acid ester, metallic salt of carboxylic acid derivative, metallic salt of salicylic acid and salicylic acid, sulfonic acids, sulfonates, phosphoric acids, phosphoric acid metallic salts, acidic phosphoric acid esters, acidic phosphoric acid ester metallic salts, phosphorous acids, and phosphorous acid metallic salts may be used.

The decolorant is an additive that decolors the leuco dye. A compound that disassociates bond between the leuco dye and the developer may be used as the decolorant. A preferable compound as the decolorant is a compound that does not exhibit a color developing property for the leuco dye and has such a level of polarity that the compound dissolves the leuco dye and the developer. A decolorant as described above includes compounds such as hydroxy compounds, ester compounds, peroxy compounds, carbonyl compounds, aromatic compounds, aliphatic compounds, halogen compounds, amino compounds, imino compounds, N-oxide compounds, hydroxyamine compounds, nitro compounds, azo compounds, diazo compounds, azides, ether compounds, fat, sugar, peptide, nucleic acid, alkaloid, and steroid.

In the following description, an environment detection ink is used as an example to describe the disclosure, in which the colordensity of the environment detection ink increases (changes from a decolored state to a colored state) depending on a change of an environment. FIG. . 1A is a diagram showing a state of a printed matter at a time point of beginning of usage(start time point of monitoring). At the time point of beginning of usage of the printed matter, the reference region 100 is in the colored state, and the sensor region 101 is in the decolored state. The time point of beginning of usage (start time point of monitoring) of the printed matter is a moment when the printed matter starts monitoring or measuring of the change of the environment. Moreover, the colored state is a state where the color density is the highest in a color change process of the ink whose color changes depending on a change of an environment. The decolored state is a state where the color density is the lowest in the color change process of the ink whose color changes depending on a change of an environment.

Note that, in the case of an environment detection ink whose color density decreases (changes from the colored state to the decolored state) depending on a change of an environment, the reference region is in the decolored state and the sensor region is in the colored state at the time point when the printed matter starts to be used. Accordingly, the reference region is not limited to the colored state.

For example, the circle type printed matter 10 may be obtained by forming the reference region 100 by printing it in a colored state with an ink that develops a blue color at high temperature, and' by forming the sensor region. 101 by printing it in a decolored state with the same ink used for the reference region 100.

When the ink is in the decolored state by, for example, irradiating a laser with a certain wavelength (initialization step), it is possible to print a region including the reference region 100 and the sensor region 101 with one color of the environment detection ink, and make only the sensor region 101 in the decolored state by performing the initialization step. Specifically, when the printed matter is in the colored state, it is suitable that a region that is decolored as the initialization step is heated by the laser irradiation to the temperature at which decolorization occurs and then rapidly cooled to the temperature at which color development does not occur.

The circle type printed matter 10 in an initialized state in which only the sensor region 101 is in the decolored state by the initialization step is used.as a color sensor.

FIG. 1B shows a state of the circle type printed matter 10 in a process in which the sensor region 101 develops a blue color by being exposed to high temperature or low temperature. In this case, since the reference region 100 exists around the sensor region 101 while being in contact therewith, the stage of the depth of the color development of the sensor region 101 may be visually determined as an intermediate stage by comparing it with the reference region 100.

Moreover, the color of the sensor region 101 being an intermediate color of the color development may be digitized and quantitively grasped by using a dedicated reading apparatus and an information processing apparatus. The reading apparatus and the information processing apparatus may be independent apparatuses or an integrated apparatus.

The reading apparatus required for digitalization of the color development density includes an imaging apparatus that captures regions of both of the reference region 100 and the sensor region 101 and an optical apparatus that obtains spectrum data from reflected light. The imaging apparatus may be a color or monochrome imaging apparatus, and is not limited to a particular imaging apparatus as long as it is capable of indicating a difference in color density between the reference region 100 and the sensor region 101. A digital camera, a smartphone with a built-in camera, a tablet terminal with a built-in camera, and the like are given as examples. The optical apparatus is not limited to a particular optical apparatus as long as it is capable of indicating a difference in spectrum data between the reference region 100 and the sensor region 101. A spectrophotometer, a chromometer, a colorimeter, a color-difference meter, and the like are given as examples.

An example that analyzes a color development as an intermediate color is described below in which image data obtained by the imaging apparatus is analyzed. For example, an image including both the reference region 100 and the sensor region 101 is captured by, for example, a digital camera, then, for example, RGB values of the colors of the reference region 100 and the sensor region 101 in the captured image are extracted and analyzed with the information processing apparatus, thereby the degree of the color development of the sensor region 101 relative to the color development of the reference region 100 is grasped quantitatively.

Moreover, an Example of analysis of the color development as an intermediate color from spectrum data is described below. For example, by using a spectrophotometer that converts a color into numerical form based on a calculated value obtained by measuring the reflectance on each of the reference region 100 and the sensor region 101, the degree of the color development of the sensor region 101 is grasped quantitively with the information processing apparatus based on a difference between the spectrum intensity of the color development of the sensor region 101 and the intensity of the color development of the reference region 100.

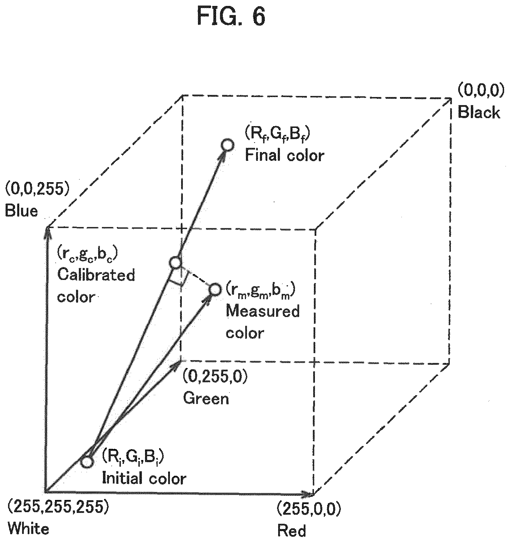

A method of digitalizing the color development density in the case where the color changes from white to blue is described as an example of a method of digitalizing the color development density performed by the information processing apparatus, with reference to FIG. 6.

Note that, in the present embodiment, the description is given by using an example in which a RGB (red, green, and blue) model is employed as a color model for description. In the RGB model, a color of one pixel forming an image is expressed as a combination of numerical values for the respective three colors of R (red), G (green), and B (blue), the values each ranging from 0, that is the darkest, to 255, that is the lightest. Hereafter, RGB components are noted while being parenthesized as (R (red), G (green), B (blue)). For example, a dark blue color is (0, 0, 255), a black color that is the darkest is (0, 0, 0), and a white color that is the lightest is (255, 255, 255).

FIG. 6 is a diagram explaining an intermediate color of the color development. Formulae (1) and (2) describe vectors of a final color and an intermediate color of the reference region 100. with an initial color being an origin.

$$\text{Final color } (R, G, B) = (R_f - R_i, G_f - G_i, B_f - B_i) \ \ldots \text{ Formula (1)}$$

$$\text{Measured color } (r, g, b) = (r_m - R_i, g_m - G_i, b_m - B_i) \ \ldots \text{ Formula (2)}$$

Based on Formulae (1) and (2), lengths (absolute value of R and absolute value of r, respectively) of the vectors from the initial color to the final color and the intermediate color are expressed by Formulae (3) and (4).

$$|R| = \sqrt{R^2 + G^2 + B^2} \quad \ldots \text{ Formula (3)}$$

$$|r| = \sqrt{r^2 + g^2 + b^2} \quad \ldots \text{ Formula (4)}$$

A length from the intermediate color ($r_m$, $g_m$, $b_m$) to a corrected color ($r_c$, $g_c$, $b_c$) obtained by dropping a perpendicular line onto the vector of Formula (1) is expressed by Formula (5).

$$\frac{|r||R|\cos\theta}{|R|} = |r|\cos\theta \quad \ldots \text{ Formula (5)}$$

An inner product of the vectors of Formulae (3) and (4) is expressed by Formula (6).

$$|r||R|\cos\theta = \sqrt{r^2 + g^2 + b^2}\sqrt{R^2 + G^2 + B^2}\cos\theta = rR + gG + bB \quad \ldots \text{ Formula (6)}$$

A ratio of the length (aforementioned Formula (4)) of the vector from the initial color to the corrected color relative to the length (aforementioned Formula (3)) of the vector from the initial color to the final color is calculated by substituting Formulae (5) and (6) into Formulae (3) and (4), resulting in Formula (7).

$$\frac{|r|cos\theta}{|R|}\times 100 = \frac{\sqrt{r^2+g^2+b^2}cos\theta}{\sqrt{R^2+G^2+B^2}}\times 100$$

$$= \frac{\sqrt{r^2+g^2+b^2}}{\sqrt{R^2+G^2+B^2}}\times \frac{rR+gG+bB}{\sqrt{r^2+g^2+b^2}\sqrt{R^2+G^2+B^2}}\times 100$$

$$= \frac{rR+gG+bB}{R^2+G^2+B^2}\times 100 \qquad\qquad ...\ Formula\ (7)$$

Formula (7) is defined as the color development density, and the intermediate color is one of colors whose color development density calculated by using Formula (7) is larger than 0% and smaller than 100%. The color development density is defined such that the larger the color development density is, the darker the color is, and the smaller the color development density is, the fainter (lighter) the color is. As described above, in the case where the color of the sensor region 101 changes from white to blue, the color density of white is described as $(R_i, G_i, B_i)$, and the color density of dark blue is described as $(R_f, G_f, B_f)$.

FIG. 1C shows a state of the circle type printed matter 10 after the sensor region 101 develops a blue color by being exposed to high temperature or low temperature. In this case, since the reference region 100 exists around the sensor region 101 in a form in contact therewith, the depth of the color development of the sensor region 101 may be determined as the same as that of the reference region 100, by comparing the sensor region 101 with the reference region 100, by visual observation or by digitalizing it or by using the reading apparatus. Moreover, the determination may be performed by converting the color into a numerical value by using the reading apparatus described above.

In a printing form in which the circle type printed matter 10 of FIGs. 1A to 1C is. one example, by providing the same type of environment detection ink in the reference region 100 and the sensor region 101, a system that enables to determine the color density of the senor regions accurately by visual observation or by digitalizing it by using a reading apparatus is provided, without using a color sample that hardly changes depending on a change of an environment in the reference region.

(Second Embodiment)

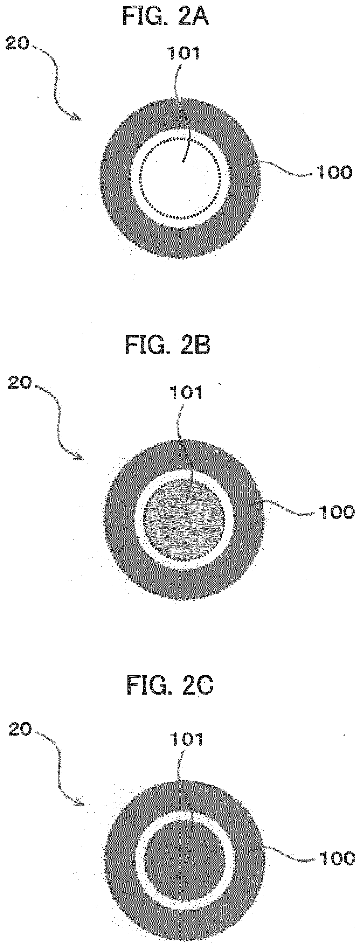

FIG. 2A is a schematic diagram of a state before a change of the sensor region 101 in a double-circle type printed matter 20 according to a second embodiment. FIG. 2B is a schematic diagram of a state in a middle of the change of the sensor region 101 in the double-circle type printed matter 20 according to the second embodiment. FIG. 2C is a schematic diagram of a state after the change of the sensor region 101 in the double-circle type printed matter 20 according to the second embodiment. Description of portions overlapping those of the first embodiment is omitted in the second embodiment and beyond.

FIGs. 2A to 2C are the schematic diagrams of the double-circle type printed matter 20, and show the double-circle type printed matter 20 in a double-circle form in a simplified manner for the description of the configuration of the present embodiment. The reference region 100 and the sensor region 101 of the double-circle type printed matter 20 are arranged to be separated from each other. The double-circle type printed matter 20 includes colored regions, and the color thereof is not limited to a particular color. Specifically, the double-circle type printed matter 20 is, for example, blue, and is displayed on, for example, a product (not shown) having, for example, a white ground. In the shown example, the depth of blue is represented by shade of black and white. For example, the reference region 100 and the sensor region 101 may be displayed by printing it by using an ink (environment detection ink) that develops a blue color, for example, when temperature becomes high or low.

Separating the reference region 100 and the sensor region 101 may prevent overlapping of the reference region 100 and the sensor region 101 in the case where the regions are to be printed in the colored state and the decolored state, respectively.

Moreover, in the initialization step, upon making the sensor region 101 in the decolored state, it is possible to make only the sensor region 101 in the decolored state without caring for, for example, the resolution of the laser irradiation. Similarly, upon making the reference region 100 in the decolored state, it is possible to make only the reference region 100 in the decolored state without caring for, for example, the resolution of the laser irradiation.

FIG. 2B shows a state of the double-circle type printed matter 20 in a process in which the sensor region 101 develops a blue color by being exposed to high temperature or low temperature. In this case, even when the sensor region 101 is arranged to be separate from the reference region 100, the depth of the color development of the sensor region 101 may be determined as an intermediate stage by comparing the sensor region 101 with the reference region 100, by visual observation or by digitalizing it by using the reading apparatus.

FIG. 2C shows a state of the double-circle type printed matter 20 after the sensor region 101 develops a blue color by being exposed to high temperature or low temperature. In this case, even when the sensor region 101 is arranged to be separate from the reference region 100, the depth of the color development of the sensor region 101 may be determined as the same as that of the reference region 100 by comparing the sensor region 101 with the reference region 100, by visual observation or by digitalizing it by using the reading apparatus.

In a printing form in which the double-circle type printed matter 20 of FIGs. 2A to 2C is one example, by providing the same type of environment detection ink in the reference region 100 and the sensor region 101, a system that enables to determine the color density of the sensor region 101 accurately by visual observation or by digitalizing it by using the reading apparatus is provided, without using a color sample that hardly changes depending on a change of an environment in the reference region.

(Third Embodiment)

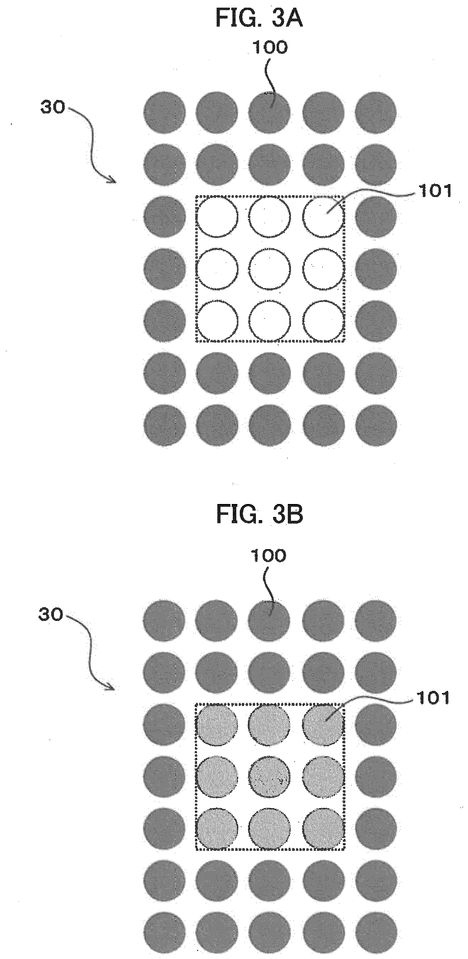

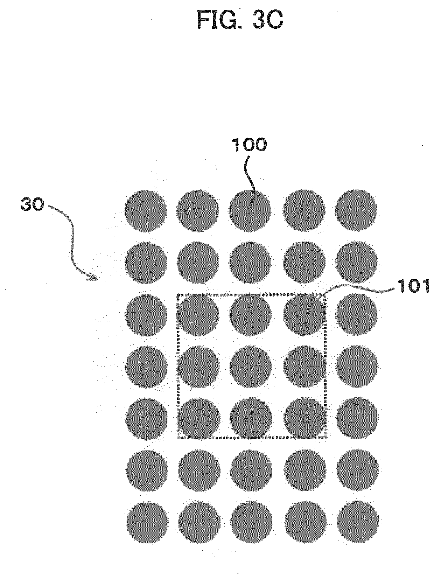

FIG. 3A is a schematic diagram of a state before a change of the sensor region 101 in a dot type printed matter 30 according to a third embodiment. FIG. 3B is a schematic diagram of a state in a middle of the change of the sensor region 101 in the dot type printed matter 30 according to the third embodiment. FIG. 3C is a schematic diagram of a state after the change of the sensor region 101 in the dot type printed matter 30 according to the third embodiment.

FIGs. 3A to 3C are the schematic diagrams of the dot type printed matter 30, and show the dot type printed matter 30 in a 5×7 dot type in a simplified manner for the description of the present embodiment. The dot type printed matter 30 includes the reference region 100 formed of multiple dots and the sensor region 101 formed of multiple dots. The dot type printed matter 30 includes colored regions, and the color thereof is not limited to a particular color. Specifically, the dot type printed matter 30 is, for example, blue, and is displayed on, for example, a product (not shown) having, for example, a white ground. In the shown example, the depth of blue is represented by shade of black and white. For example, the reference region 100 and the sensor region 101 may be displayed by printing using an ink (environment detection ink) that develops a blue color, for example, when temperature becomes high or low.

An industrial inkjet printer may be used as a printing apparatus by designing the reference region 100 and the sensor region 101 as dot type regions. It is possible to print the reference region 100 in the colored state and print the sensor region 101 in the decolored state by using the industrial inkjet printer. Moreover, in the case where for example, the high-speed laser irradiation to the dot type printed matter on a target object flowing at high speed in the initialization step is possible to be applied in which the dot type printed matter consisting of the environment detection ink and being formed by an industrial inkjet printer, only the sensor region 101 on the target object flowing at high speed may be in the decolored state.

FIG. 3B shows a state of the dot type printed matter 30 in a process in which the sensor region 101 develops a blue color by being exposed to high temperature or low temperature. In this case, even when the sensor region 101 and the reference region 100 are arranged in a dot pattern, the depth of the color development of the sensor region 101 may be determined as in an intermediate stage by comparing the sensor region 101 with the reference region 100, by visual observation or by digitalizing it by using a reading apparatus.

FIG. 3C shows a state of the dot type printed matter 30 after the sensor region 101 develops a blue color by being exposed to high temperature or low temperature. In this case, even when the sensor region 101 and the reference region 100 are arranged in a dot pattern, the depth of the color development of the sensor region 101 may be determined as the same as that of the reference region 100 by comparing the sensor region 101 with the reference region 100, by visual observation or by digitalizing it by using a reading apparatus.

In a printing form in which the dot type printed matter 30 of FIGs. 3A to 3C is one example, by providing the same type of environment detection ink in the reference region 100 and the sensor region 101, a system that enables to determine the color density of the sensor region accurately by visual observation or by digitalizing it by using the reading apparatus is provided, without using a color sample that hardly changes depending on an environment change in the reference region.

(Fourth Embodiment)

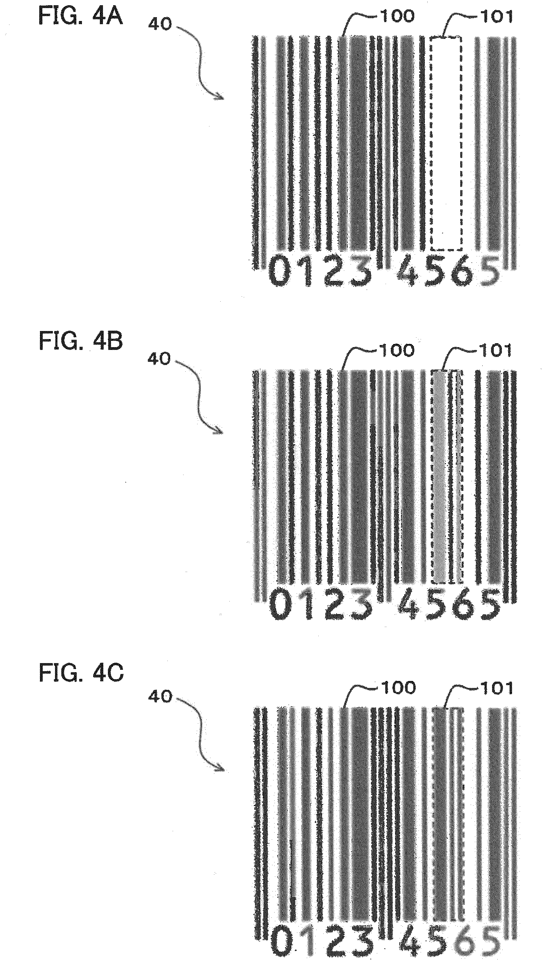

FIG. 4A is a schematic diagram of a state before a change of the sensor region 101 in a barcode type printed matter 40 according to a fourth embodiment. FIG. 4B is a schematic diagram of a state in a middle of the change of the sensor region 101 in the barcode type printed matter 40 according to the fourth embodiment. FIG. 4C is a schematic diagram of a state after the change of the sensor region 101 in the barcode type printed matter 40 according to the fourth embodiment.

FIGs. 4A to 4C are the schematic diagrams of the barcode type printed matter 40, and show the barcode type printed matter 40 in a barcode of a short-form JAN code in a simplified manner for the description of the present embodiment. However, the printed matter 40 is not limited to a particular code as long as it is a one-dimensional code. In the case of the one-dimensional barcode, a predetermined standard is, for example, ISO/IEC 15420:2000. The barcode type printed matter 40 includes the reference region 100 formed of multiple lines and the sensor region 101 formed of multiple lines. The barcode type printed matter 40 includes colored regions, and the color thereof is not limited to a particular color as long as a code formed in a color having changed by the color development is readable by a dedicated reader. Specifically, the barcode type printed matter 40 is, for example, black, and is displayed on, for example, a product (not shown) having, for example, a white ground. In the shown example, the depth of black is represented by shade of black and white. For example, the reference region 100 and the sensor region 101 is displayed by printing it by using an ink (environment detection ink) that develops a black color, for example, when temperature becomes high or low.

Both of the reference region 100 and the sensor region 101 function as an information recording region by designing the reference region 100 and the sensor region 101 as barcode type regions. Moreover, the barcode type printed matter 40 functions as a code only when the barcode type printed matter 40 is exposed to high temperature or low temperature and then the sensor region 101 is in the colored state.

FIG. 4B shows a state of the barcode type printed matter 40 in a process in which the sensor region 101 develops a black color by being exposed to high temperature or low temperature. In this case, even when the sensor region 101 and the reference region 100 are arranged in a barcode pattern, the depth of the color development of the sensor region 101 is determined as in an intermediate stage by comparing the sensor region 101 with the reference region 100, by visual observation or by digitalizing it by using a reading apparatus.

FIG. 4C shows a state of the barcode type printed matter 40 after the sensor region 101 develops a black color by being exposed to high temperature or low temperature. In this case, even when the sensor region 101 and the reference region 100 are arranged in a barcode pattern, the depth of the color development of the sensor region 101 may be determined as the same as that of the reference region 100 by comparing the sensor region 101 with the reference region 100, by visual observation or by digitalizing it by using the reading apparatus.

In a printing form in which the barcode type printed matter 40 of FIGs. 4A to 4C, by providing the same type of environment detection ink in the reference region 100 and the sensor region 101, a system that enables to determine the color density of the sensor region accurately by visual observation or by digitalizing it by using a reading apparatus is provided, without using a color sample that hardly changes depending on a change of an environment in the reference region.

(Fifth Embodiment)

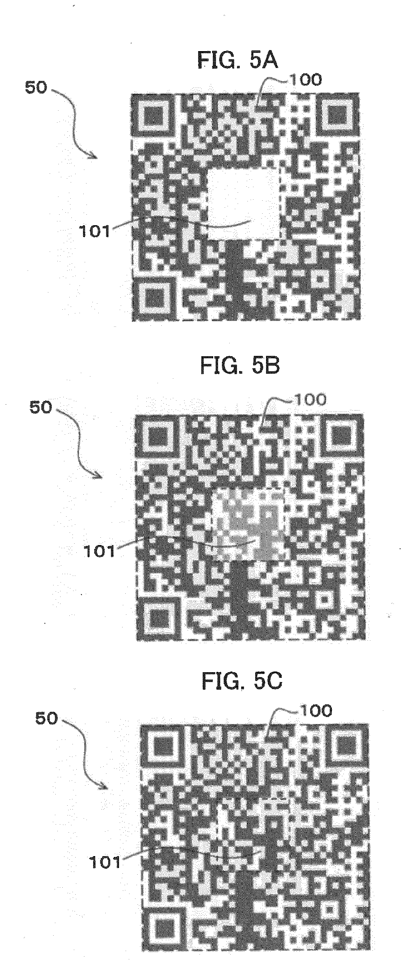

A fifth embodiment is a case where the present invention is applied to QR code (registered trademark) that is a two-dimensional code. FIG. 5A is a schematic diagram of a state before a change of the sensor region 101 in a QR code type printed matter 50 according to the fifth embodiment. FIG. 5B is a schematic diagram of a state in a middle of the change of the sensor region 101 in the QR code type printed matter 50 according to the fifth embodiment. FIG. 5C is a schematic diagram of a state after the change of the sensor region 101 in the QR code type printed matter 50 according to the fifth embodiment.

FIGS. 5A to 5C are the schematic diagrams of the QR code type printed matter 50, and show the QR code type printed matter 50 in a $37 \times 37$ cell QR code of version 5 in a simplified manner for the description of the present embodiment. However, the printed matter 50 is not limited to a particular code as long as it is a two-dimensional code. In the case of QR code, a predetermined standard is, for example, ISO/IEC18004. The QR code type printed matter 50 includes the reference region 100 formed of multiple cells and the sensor region 101 formed of multiple cells. The QR code type printed matter 50 is colored, and the color thereof is not limited to a particular color as long as a code formed in a color having changed by the color development is readable by a dedicated reader or software. Specifically, the QR code type printed matter 50 is, for example, black, and is displayed on, for example, a product (not shown) having, for example, a white ground. In the shown example, the depth of black is represented by shade of black and white. For example, the reference region 100 and the sensor region 101 may be displayed by printing it by using an ink (environment detection ink) that develops a black color, for example, when temperature becomes high or low.

Both of the reference region 100 and the sensor region 101 function as an information recording region by designing the reference region 100 and the sensor region 101 as QR code type regions. Moreover, when the sensor region 101 is in the decolored state, the QR code type printed matter 50 maintains or disables a function as a code, depending on a method of arrangement in the QR code. Arranging the sensor region 101 within a range of an error correction function in which data is restored by the code itself even if the QR code is stained or destroyed, for example, within an area 30% of an entire area or smaller allows the QR code type printed matter 50 to maintain the function. In the arrangement of the sensor region 101 shown in the QR code type printed matter 50, information in the QR code may be obtained even if the sensor region 101 is in the decolored state.

FIG. 5B shows a state of the QR code type printed matter 50 in a process in which the sensor region 101 develops a black color by being exposed to high temperature or low temperature. In this case, even when the sensor region 101 and the reference region 100 are arranged in a QR code pattern, the depth of the color development of the sensor region 101 may be determined as in an intermediate stage by comparing the sensor region 101 with the reference region 100, by visual observation or by digitalizing it by using the reading apparatus.

FIG. 5C shows a state of the QR code type printed matter 50 after the sensor region 101 develops a black color by being exposed to high temperature or low temperature. In this case, even when the sensor region 101 and the reference region 100 are arranged in a QR code pattern, the depth of the color development of the sensor region 101 may be determined as the same as that of the reference region 100 by comparing the sensor region 101 with the reference region 100, by visual observation or by digitalizing it by using the reading apparatus.

According to the first to fifth embodiments, provided is the printed matter formed by using the ink whose color density changes depending on a change of an environment, the printed matter includes a first region (reference region 100) formed by using the ink and a second region (sensor region 101) formed by using an ink identical to the ink of the first region, the first region is in the colored or decolored state, and the second region has a color density different from that of the first region at the start time point of the monitoring the change of an environment.

The area of the first region is preferably arranged to be larger than the area of the second region. Moreover, first regions may be arranged on opposite sides with respect to a point of the second region being centered. when the color density of the second region is determined by referring the color density of the first region as a reference, by making the area of the first region larger than the area of the second region and improving the visibility of the color density of the first region as the reference, the determination of the color density of the second region is thereby facilitated.

(Reading System)

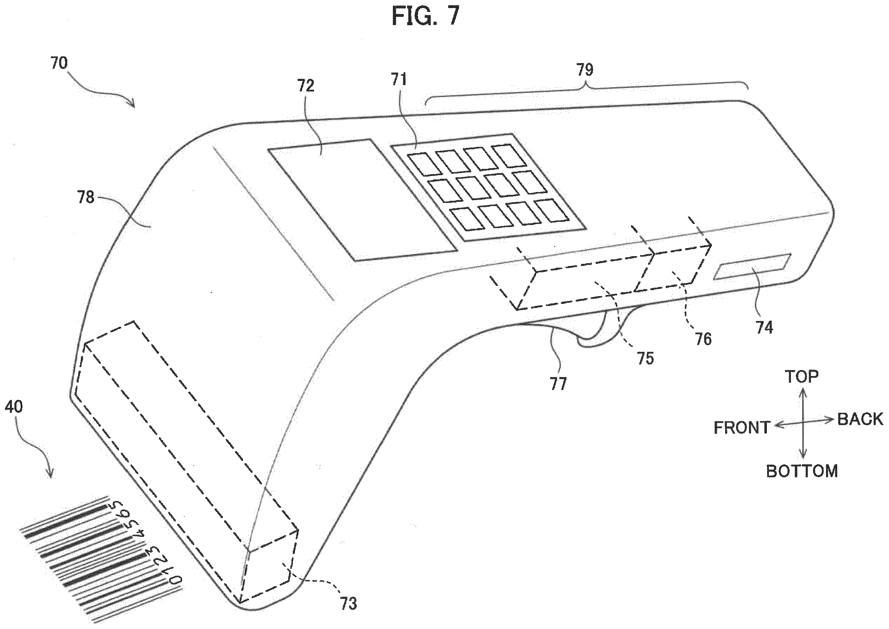

FIG. 7 is an explanatory view showing an exterior and a configuration of a reading terminal 70 that is an example of a reading system according to the present embodiment. FIG. 7 shows reading of the barcode type printed matter 40. The reading terminal 70 includes a display 72 and an inputter 71 used to input numbers and characters, on an upper surface of a case 78. A front tip end portion of the reading terminal 70 includes a reader 73. A lower surface of a handle 79 of the case 78 includes a switch 77 used when a code (product identification information) (for example, one-dimensional barcode or QR code) is to be read with the reader 73. The switch 77 is used also when color tone information of the sensor region 101 is to be read. The case 78 includes a processor 75 that judges whether a color change has occurred or not based on the color tone information read by the reader 73, a communicator 76 that communicates with a management server, a storage 74, and the like. Moreover, the reading terminal 70 has a GPS (global positioning system) function to obtain position information.

Regarding the reader 73, a detection method varies depending on a code given to a management target product for identification. In the case where the barcode is given, an infrared barcode detector is given as an example. Moreover, for a two-dimensional code such as QR code or a product itself, an image detector such as a camera is given as an example. For an electronic tag (for example, RF tag), a dedicated reader such as an RFID system is given as an example. In the present embodiment, a CCD camera used to read product information of a barcode and hue and optical information of the environment detection ink is used in the reader 73 as a detector.

The storage 74 includes an SDRAM (synchronous dynamic random access memory), EEPROM (registered trademark) (electrically erasable programmable read-only memory), a SD memory card, and the like. The processor 75 is implemented by causing a CPU (central processing unit) to execute a program on a memory.

The reading system of the present embodiment is a reading system that reads the color density of the printed matter formed by using the ink whose color density changes depending on the surrounding environment, and includes an information reading apparatus and an information processing apparatus, the printed matter includes the first region (reference region 100) formed by using the ink and the second region (sensor region 101) formed by using an ink identical to the ink of the first region, the first region is in a colored state or a decolored state, the second region has a color density different from that of the first region at the start time point of monitoring of a change of an environment, the information obtaining apparatus obtains the color information of the first region and the second region, and the information processing apparatus determines color information of the second region by using color information of the first region as a standard. Therefore, the color density of a printed matter is easily and accurately read without using a color sample that is different from the environment detection ink used in the sensor region 101 and does not change depending on a change of an environment in a reference region.

The information obtaining apparatus may be an imaging apparatus that obtains an image including at least a portion of the first region and a portion of the second region.

The information obtaining apparatus may be an optical apparatus that records information on a reflection, a refraction, or an interference phenomenon of light on at least portions of the first region and the second region.

As shown in FIG. 7, the information obtaining apparatus and the information processing apparatus may be integrated into an apparatus.

**Reference Signs List**

| | |
|---|---|
| 10 | circle type printed matter |
| 20 | double-circle type printed matter |
| 30 | dot type printed matter |
| 40 | barcode type printed matter |
| 50 | QR code type printed matter |
| 70 | reading terminal (reading system) |
| 72 | display |
| 73 | reader (information obtaining apparatus) |
| 74 | storage |
| 75 | processor (information processing apparatus) |
| 76 | communicator |
| 77 | switch |
| 78 | case |
| 79 | handle |
| 100 | reference region (first region) |
| 101 | sensor region (second region) |

**Claims**

1. A printed matter formed with an ink whose color density changes depending on a change of an environment comprising:

    a first region formed with the ink; and
    a second region formed with the ink identical to the ink of the first region, wherein
    the first region is in a colored state or a decolored state, and
    a color density of the second region is different from a color density of the first region at a start time point of monitoring the change of the environment.

2. The printed matter as claimed in claim 1, wherein
the color density of the second region is the highest color density or the lowest color density in a process of a color change of the ink, at the start time point of monitoring the change of the environment.

3. The printed matter as claimed in claim 1, wherein
an area of the first region is larger than an area of the second, region.

4. The printed matter as claimed in claim 1, wherein
first regions are arranged on opposite sides with respect to a point of the second region being centered.

5. The printed matter as claimed in claim 1, wherein
the first region and the second region are formed of multiple dots respectively.

6. The printed matter as claimed in claim 1, wherein
the first region and the second region are portions of an identical one-dimensional barcode respectively.

7. The printed matter as claimed in claim 1, wherein the first region and the second region are portions of an identical two-dimensional barcode respectively.

8. The printed matter as claim in claim 1 to claim 7, wherein
the change of the environment includes a change of a temperature.

9. A reading system reading, a color density of a printed matter formed with an ink whose color density is changed depending on a surrounding environment comprising:

an information obtaining apparatus; and
an information processing apparatus, wherein

> the printed matter comprises a first region formed with the ink, and a second region formed with the ink identical to the ink of the first region,
> the first region is in a colored state or a decolored state, and a color density of the second region is different from a color density of the first region, at the start time point of monitoring a change of an environment,
> the information obtaining apparatus is configured to obtain color information of each of the first region and the second region,
> the information processing apparatus is configured to determine color information of the second region by using the color information of the first region as a reference.

10. The reading system as claimed in claim 9, wherein
the information obtaining apparatus includes an imaging device configured to obtain an image including at least a portion of the first region and at least a portion of the second region.

11. The reading system as claimed in claim 9, wherein
the information obtaining apparatus includes an optical apparatus configured to record information on a reflection, a refraction, or an interference phenomenon of light on at least portions of the first region and the second region.

12. The reading system as claimed in claim 11, wherein
the information obtaining apparatus and the information processing apparatus are integrated into an apparatus.

# FIG. 1A

# FIG. 1B

# FIG. 1C

# FIG. 2A

# FIG. 2B

# FIG. 2C

# FIG. 3A

# FIG. 3B

FIG. 3C

FIG. 4A

FIG. 4B

FIG. 4C

## FIG. 5A

## FIG. 5B

## FIG. 5C

## FIG. 6

$(0,0,0)$
Black

$(R_f,G_f,B_f)$
Final color

$(0,0,255)$
Blue

$(r_c,g_c,b_c)$
Calibrated
color

$(r_m,g_m,b_m)$
Measured
color

$(0,255,0)$
Green

$(R_i,G_i,B_i)$
Initial color

$(255,255,255)$
White

$(255,0,0)$
Red

# FIG. 7

EP 4 339 561 A1

## INTERNATIONAL SEARCH REPORT

| International application No. |
|---|
| **PCT/JP2021/035202** |

**A.    CLASSIFICATION OF SUBJECT MATTER**

*G01D 21/00*(2006.01)i; *G01J 3/46*(2006.01)i; *G01J 3/52*(2006.01)i; *G01K 11/12*(2021.01)i
FI:    G01D21/00 M; G01K11/12 B; G01J3/46 Z; G01J3/52

According to International Patent Classification (IPC) or to both national classification and IPC

**B.    FIELDS SEARCHED**

Minimum documentation searched (classification system followed by classification symbols)

G01D21/00; G01K11/12-11/18; G01J3/46-3/52; G01N21/78-21/81

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2010-91470 A (NIPPON TELEGR. & TELEPH. CORP.) 22 April 2010 (2010-04-22) paragraphs [0002]-[0006], [0024]-[0058], fig. 1-11 | 1-7, 12 |
| X | | 9-11 |
| A | | 8 |
| Y | JP 2017-503174 A (BLOOM ENERGY CORP.) 26 January 2017 (2017-01-26) paragraph [0074], fig. 12 | 1-7 |
| Y | JP 2009-69048 A (NIPPON TELEGR. & TELEPH. CORP.) 02 April 2009 (2009-04-02) paragraph [0015], fig. 1 | 12 |

☐ Further documents are listed in the continuation of Box C.     ☑ See patent family annex.

| *    Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **25 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/035202**

| Patent document cited in search report | | | Publication date (day/month/year) | Patent family member(s) | Publication date (day/month/year) |
|---|---|---|---|---|---|
| JP | 2010-91470 | A | 22 April 2010 | (Family: none) | |
| JP | 2017-503174 | A | 26 January 2017 | US 2015/0194685 A1 paragraph [0102], fig. 12 WO 2015/103529 A1 | |
| JP | 2009-69048 | A | 02 April 2009 | (Family: none) | |

Form PCT/ISA/210 (patent family annex) (January 2015)

**EP 4 339 561 A1**

**Patent documents cited in the description**

- JP 2012093277 A
- JP 2020038073 A